# EUROPÄISCHE PATENTSCHRIFT

(11) **EP 2 123 563 B1**
(45) Veröffentlichungstag und Bekanntmachung des Hinweises auf die Patenterteilung: **23.05.2012**
(21) Anmeldenummer: 09010785.5
(22) Anmeldetag: 15.03.2007
(51) Int. Cl.: B65B 19/22, B65B 35/46, B65B 19/04, B65B 19/10

(54) **Verfahren und Vorrichtung zum Fördern von Zigaretten-Gruppen oder anderen Gegenständen**
Method and device for transporting cigarette groups or other objects
Procédé et dispositif de transport de groupes de cigarettes ou autres objets

(30) Priorität: 20.03.2006 DE 102006013038
(43) Veröffentlichungstag der Anmeldung: 25.11.2009
(62) Teilanmeldung aus: 07723271.8
(73) Patentinhaber: Focke & Co. (GmbH & Co. KG), 27283 Verden (DE)
(72) Erfinder: Bretthauer, Hans- J., 28201 Bremen (DE); Roesler, Burkard, 27337 Blender (DE)
(74) Vertreter: Ellberg, Nils

(56) Entgegenhaltungen:
- EP-A1- 0 210 544
- EP-A1- 0 963 912
- WO-A1-00/17053
- DE-A1- 19 902 453
- GB-A- 926 776
- US-A- 1 647 265
- US-A- 2 942 757
- US-A- 3 448 846
- US-A- 4 059 940
- US-A- 4 367 618
- US-A- 4 607 477

## Beschreibung

Die Erfindung betrifft eine Vorrichtung sowie ein Verfahren zum Fördern von Zigaretten-Gruppen oder anderen Gegenständen in bzw. im Zusammenhang mit einer Verpackungsmaschine mit den Merkmalen des Oberbegriffs des Patentanspruchs 1 bzw. mit den Merkmalen des Oberbegriffs des Patentanspruchs 5.

Aus der US 4,059,940 ist eine Überführungseinrichtung mit einem Überführteil gemäß dem Oberbegriffs des Anspruchs 1 bekannt, das translatorische Hin- und Herbewegungen ausführt. Angetrieben wird das Überführteil mit einem ebenfalls Hin- und Herbewegungen ausführenden Schwenkhebel. Der Schwenkhebel wiederum wird in üblicher Art und Weise mittels weiterer Getriebeglieder von einer Kurvenscheibe angetrieben, die Drehbewegungen in ein und derselben Richtung ausführt.

Die Aufgabe der vorliegenden Erfindung besteht darin, die eingangs genannten Vorrichtungen als Teil einer Verpackungsmaschine bzw. das eingangs genannte Verfahren zu verbessern.

Die erfindungsgemäße Aufgabe wird gelöst durch eine Vorrichtung mit den Merkmalen des Anspruches 1 sowie ein Verfahren mit den Merkmalen des Anspruches 5.

Danach ist ein Verfahren zum Fördern von Zigaretten-Gruppen oder anderen Gegenständen in bzw. im Zusammenhang mit einer Verpackungsmaschine, wobei die Gegenstände mittels einer Überführungseinrichtung translatorisch aus einer Anfangsposition in eine Endposition überführt werden, und wobei die Überführungseinrichtung ein Überführteil aufweist, das die Gegenstände aus der Anfangsposition in die Endposition stößt oder schiebt, dadurch gekennzeichnet, dass die Überführungseinrichtung über einen rotatorischen Servomotor sowie ein Getriebe verfügt, das Bewegungen der Welle des Servomotors in der einen Drehrichtung in eine translatorische Bewegung des Überführteils in Vorwärtsrichtung übersetzt und Bewegungen der Welle in der entgegengesetzten Drehrichtung in eine translatorische Rückbewegung des Überführteils in die entgegengesetzte Richtung, wobei der Servomotor derart gesteuert wird, dass sich die Servomotorwelle taktweise in der einen oder in der entgegengesetzten Richtung dreht, sodass das Überführteil taktweise entsprechende translatorische Vor- und/oder Rückbewegungen ausführt.

Eine entsprechende Vorrichtung zur Durchführung des Verfahrens weist die vorgenannte Überführungseinrichtung auf zur translatorischen Überführung der Gegenstände aus der Anfangsposition in die Endposition und ist gekennzeichnet durch den rotatorischen Servomotor sowie das mit der Welle des Servomotors wirkverbundene Getriebe, mit dem die Rotationsbewegung der Servomotorwelle in die translatorische Bewegung des die Gegenstände aus der Anfangsposition translatorisch in die Endposition überführenden, insbesondere stoßenden oder schiebenden, Überführteils übersetzbar ist.

Die erfindungsgemäße Überführungseinrichtung verzichtet auf den Einsatz aufwendiger Getriebe, die die Drehbewegung einer Welle in ein und derselben Richtung in eine Hin- und/oder Herbewegung des Überführteils übersetzen. Durch den Einsatz des rotatorischen Servomotors, mit dem gezielt Drehungen der Antriebswelle in entgegengesetzte Richtungen möglich sind, kann das eingesetzte Getriebe eine wartungsarme, verschleißarme und vergleichsweise verschmutzungsunanfällige Grundstruktur aufweisen.

Vorzugsweise sind das Antriebsglied des Getriebes mit der Servomotorwelle wirkverbunden und drehbar und das Abtriebsglied des Getriebes mit dem Überführteil wirkverbunden und translatorisch vor- und/oder rückbewegbar, insbesondere in einer horizontalen Ebene.

In einer analytischen Reduktion des Getriebes auf eine kinematische Kette ist das Getriebe bevorzugt ein Viergelenk-Getriebe.

Was das Überführteil betrifft, so weist es vorzugsweise ein oder mehrere fingerartige Schieber oder Einstößer auf, mit denen die Gegenstände aus der Anfangsposition in die Endposition schiebbar oder stoßbar sind.

Weitere Merkmale der vorliegenden Erfindung ergeben sich aus den beigefügten Ansprüchen, aus der nachfolgenden Beschreibung bevorzugter Ausführungsbeispiele sowie aus den anliegenden Zeichnungen. In den Zeichnungen zeigt:
- Fig. 1: eine Vorrichtung zum Fördern von Zigaretten-Gruppen als Teil einer Verpackungsmaschine in Seitenansicht,
- Fig. 2: einen Teilausschnitt der Vorrichtung aus Fig. 1 in Seitenansicht bei vergrößertem Maßstab,
- Fig. 3: einen Teilausschnitt der Einzelheit der Fig. 2,
- Fig. 4: eine Schnittdarstellung entlang der Schnittebene IV-IV in Fig. 3, insbesondere einer Überführungseinrichtung für Zigaretten-Gruppen,
- Fig. 5: eine Umlenkbahn eines Flachriemens in Draufsicht,
- Fig. 6: ein Diagramm eines idealen Bewegungsablaufes des Flachriemens,
- Fig. 7: eine Darstellung einer Kettenumlenkung in Draufsicht gemäß dem Stand der Technik,
- Fig. 8: ein Diagramm des Bewegungsablaufes der Kette in Fig. 7,
- Fig. 9: eine Draufsicht auf eine Kette mit Umlenkung,
- Fig. 10: ein Diagramm des Bewegungsablaufes der Kette in Fig. 9,
- Fig. 11 1: die Kette aus Fig. 9 in einer anderen Stellung,
- Fig. 12: das Diagramm aus Fig. 10 mit weiteren Einzelheiten,
- Fig. 13: eine besondere Ausführungsform einer Umlenkvorrichtung,

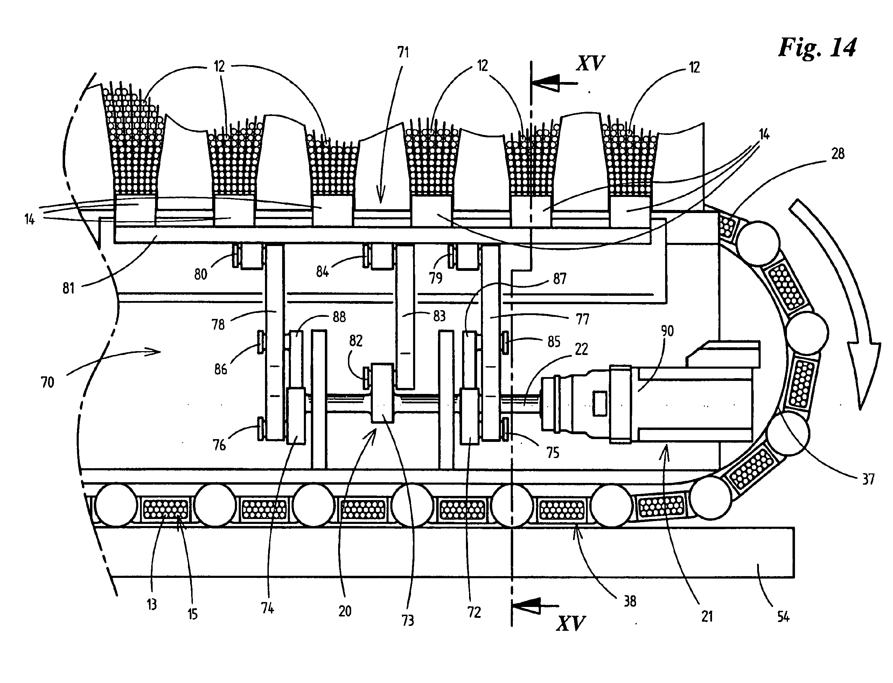

- Fig. 14: einen Teilausschnitt der Fig. 2 in Seitenansicht in vergrößerter Darstellung,

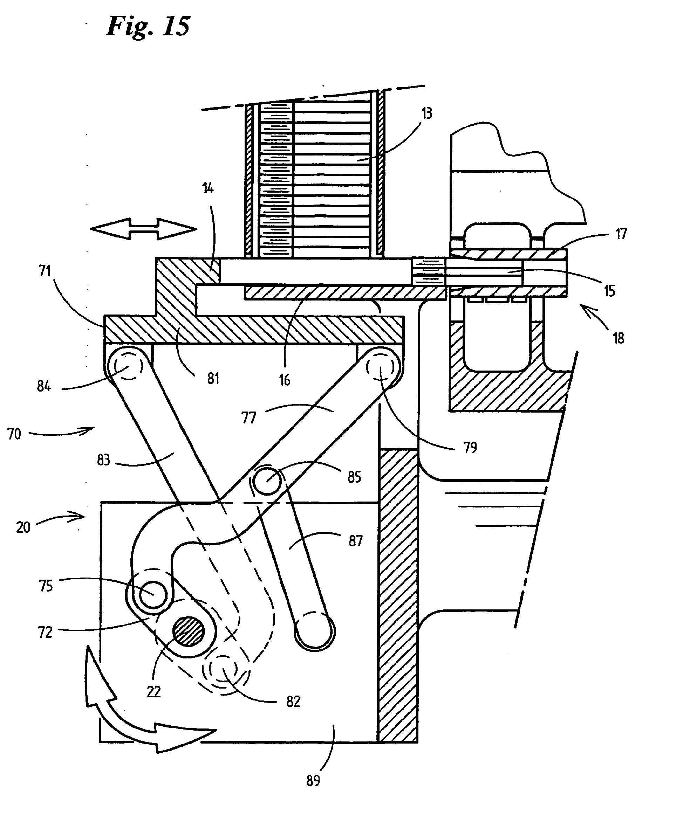

- Fig. 15: eine weitere Schnittdarstellung entlang der Schnittebene IV - IV in Fig. 3 mit gegenüber der Fig. 4 veränderter Stellung der Überführungseinrichtung.

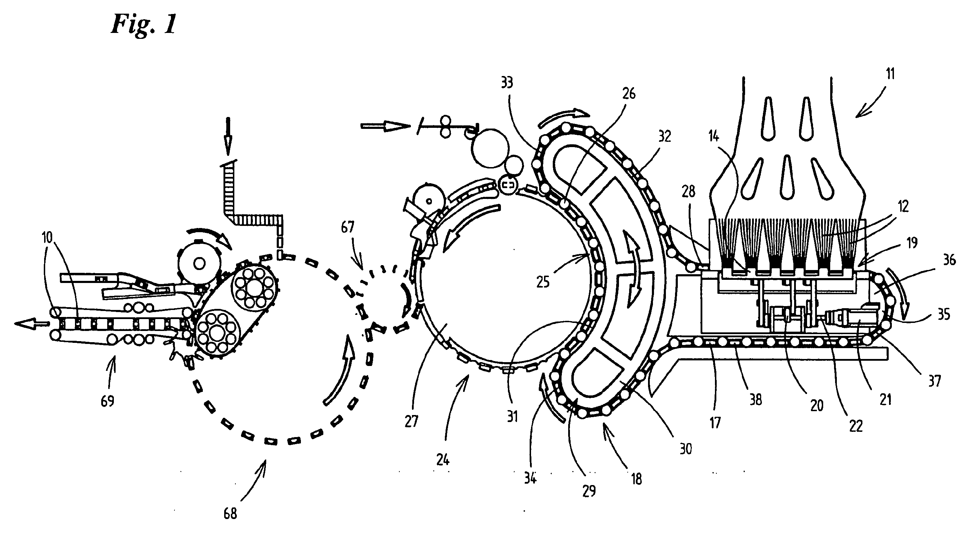

Fig. 1 zeigt die Fertigung von quaderförmigen Packungen 10, nämlich Zigarettenpackungen des Typs Weichbecher, in einer Packmaschine. Diese Zigarettenpackungen 10 dienen zur Aufnahme von Zigaretten-Gruppen 15 von Zigaretten 13, die in einer nicht dargestellten Fertigungseinheit produziert werden und von der Fertigungseinheit kommend einem Zigarettenmagazin 11 der Packmaschine zugeführt werden. Das Zigarettenmagazin 11 weist sechs Ausschubbereiche für einzelne Zigaretten-Gruppen 15 auf. Jeder Ausschubbereich verfügt über Schachtgruppen 12, die jeweils aus mehreren zusammengeführten Schächten gebildet sind. In jedem Schacht befindet sich in üblicher Weise eine Reihe von übereinander liegenden Zigaretten 13. Im unteren Bereich der Schachtgruppen 12 werden die Zigaretten-Gruppen 15 durch Schieber 14 einer Überführungseinrichtung 70 aus einer Anfangsposition in eine Endposition überführt, nämlich aus jeder Schachtgruppe 12 jeweils ausgeschoben und über eine horizontal verlaufende Führungsplatte 16 im Bereich einer Aufnahmestation 19 in Taschen 17 eines als Taschen-Förderer - Taschenkette 18 - ausgebildeten, umlaufenden Endlos-Zugmittels geschoben.

Die Zigaretten-Gruppen 15 als Packungsinhalt werden von der Taschenkette 18 anschließend an einen Falt-Revolver 24 übergeben. Dieser fertigt die Packungen 10 und übergibt sie einem Übergaberevolver 67, der die Packungen 10 zum Stabilisieren von Leimverbindungen an einen Trockenrevolver 68 weiterleitet. Die fertigen Packungen 10 werden schließlich über einen Abförderer 69 abtransportiert.

In besonderer Weise ist die Überführungseinrichtung 70 ausgebildet. Mit dieser Überführungseinrichtung 70 werden die Zigaretten-Gruppen 15 aus einer Anfangsposition in den Schachtgruppen 12 in eine Endposition innerhalb der Taschen 17 der Taschenkette 18 verschoben. Dazu weist die Überführungseinrichtung 70 ein Überführteil 71 mit sechs Schiebern 14 auf. Das Überführteil 71 verfügt über ein horizontal verlaufendes, plattenförmiges Basisteil 81, das mit den oberhalb des Basisteils 81, parallel zu diesem verlaufenden Schiebern 14 verbunden ist. Die Schieber 14 sind als fingerartige Elemente ausgebildet mit einer vorderen, insbesondere vertikal verlaufenden Schiebefläche, mit der die Zigaretten-Gruppen 15 während des Schiebevorgangs beaufschlagt werden bzw. an der die Zigaretten-Gruppen 15 dabei anliegen. Das Überführteil 71 und damit die Schieber 14 der Schachtgruppen 12 des Magazins 11 führen translatorische bzw. lineare, nämlich horizontale Hin- und/oder Herbewegungen aus.

Diese Hin- und/oder Herbewegungen des Überführteils 71 bzw. der Schieber 14 des Überführteils 71 werden über ein Getriebe 20, nämlich ein Kurbelgetriebe bewirkt. Das Getriebe 20 ist mit der Welle 22 eines rotatorischen Servomotors 21 wirkverbunden. Das Getriebe 20 ist derart ausgebildet, dass die Rotationsbewegungen der von dem Servomotor 21 angetriebenen Welle 22 in translatorische Bewegungen des Überführteils 71 umgewandelt werden. Das Überführteil 71 übernimmt dabei die Funktion des Abtriebsglieds des Getriebes 20.

Rotationsbewegungen der Welle 22 in einer ersten Drehrichtung führen zu einer Bewegung des Überführteils 71 - und mithin der Schieber 14 - auf die Zigaretten-Gruppe 15 zu, d.h. in Vorwärtsrichtung. Eine Drehbewegung der Welle 22 in zu der ersten Drehrichtung entgegengesetzten Richtung führt zu einer Rückbewegung des Überführteils 71 bzw. der Schieber 14 von der Zigaretten-Gruppe 15 weg.

Das Getriebe 20 verfügt über drei identische, jeweils mit der Welle 22 drehfest verbundene Verbindungsteile 72, 73, 74. Diese Verbindunüsteile 72, 73, 74 sind in Axialrichtung hintereinander mit Abstand zueinander angeordnet. Das Verbindungsteil 72 mit dem geringsten axialen Abstand zum Gehäuse 90 des Servomotors 21 wird im Folgenden als inneres Verbindungsteil bezeichnet, das Verbindungsteil 74 mit dem größten axialen Abstand wird als äußeres Verbindungsteil bezeichnet, das Verbindungsteil 73 mit mittlerem axialen Abstand wird als mittleres Verbindungsteil bezeichnet.

Das innere und das äußere Verbindungsteil 72, 74 erstrecken sich in dieselbe Radialrichtung, während sich das mittlere Verbindungsteil 73 in die dazu entgegengesetzte, d.h. um 180° versetzte Radialrichtung erstreckt.

Mit dem jeweils einen, nämlich dem unteren Ende des inneren Verbindungsteils 72 sowie dem unteren Ende des äußeren Verbindungsteils 74 sind jeweils über Drehgelenke 75 bzw. 76 vordere Getriebehebel 77, 78 verbunden. Die entgegengesetzten, nämlich oberen Enden der Getriebehebel 77, 78 wiederum sind über Drehgelenke 79, 80 mit der Unterseite des plattenförmigen Basisteils 81 des Überführteils 71 verbunden. Dabei sind diese oberen Enden der Getriebehebel 77, 78 im vorderen Endbereich des plattenförmigen Basisteils 81 des Überführteils 71 angeordnet.

Mit dem einen, nämlich dem unteren Ende des mittleren Verbindungsteil 73 ist über ein Drehgelenk 82 ein hinterer Getriebehebel 83 verbunden. Das entgegengesetzte, nämlich obere Ende des Getriebehebels 83 ist über ein Drehgelenk 84 mit der Unterseite des plattenförmigen Basisteils 81 des Überführteils 71 verbunden. Dabei ist das obere Ende des Getriebehebels 83 im hinteren Endbereich des Basisteils 81 angeordnet.

Die Drehgelenke 75, 76, 82 sind an den Verbindungsteilen 72, 73, 74 jeweils mit radialem Abstand zur Welle 22 angeordnet, und zwar mit jeweils identischem Abstand.

Die beiden vorderen Getriebehebel 77, 78 sind jeweils über etwa auf deren halber Länge angeordnete Drehgelenke 85, 86 mit weiteren Getriebehebeln 87, 88 verbunden, die über entsprechende Drehgelenke drehbar an einem ortsfesten Gehäuseteil 89 gelagert sind.

Die Längenverhältnisse sowie die Anordnung der einzelnen Glieder und Drehgelenke des Getriebes 20 sind insgesamt derart aufeinander abgestimmt, dass die Drehbewegung der Welle 22 in eine translatorische Bewegung des Überführteils 71 umgewandelt wird.

Während der Vorwärtsbewegung des Überführteils 71 treffen die Schiebeflächen der Schieber 14 des Überführteils 71 auf die Zigaretten-Gruppen 15 auf und verschieben diese in Richtung der Endpositionen in die Taschen 17 der Taschenkette 18. Dabei wird die Geschwindigkeit der Welle 22 des Servomotors 21 bevorzugt derart gesteuert, dass das Überführteil 71 bzw. die Schieber 14 zunächst mit möglichst geringer Geschwindigkeit auf die Zigaretten-Gruppen 15 auftreffen. Anschließend wird die Geschwindigkeit der Welle 22 erhöht, um die Zigaretten-Gruppe 15 möglichst schnell in die Endposition zu verschieben. Diese Geschwindigkeitssteuerung ist sinnvoll, um einerseits den Impulsübertrag auf die einzelnen Zigaretten beim Auftreffen der Schiebeflächen so klein wie möglich zu halten, sodass der Zigarettentabak so wenig wie möglich komprimiert wird. Andererseits wird durch die nachfolgende Beschleunigung eine möglichst hohe Taktgeschwindigkeit erzielt.

Insgesamt erfolgt mithin eine möglichst geführte Bewegung der Zigaretten-Gruppen 15. Natürlich liegt es auch die Zigaretten-Gruppen 15 nicht in die Endposition zu schieben, sondern durch einen entsprechend großen Impulsübertrag dorthin zu stoßen.

Nach Beladung der Taschen 17 mit den Zigaretten-Gruppen 15 innerhalb der Aufnahmestation 19 transportiert die Taschenkette 18 die Zigaretten-Gruppen 15 zu einem rotierenden Revolver, nämlich einem Falt-Revolver 24. Ein Teilabschnitt der Taschenkette 18 liegt an dem Falt-Revolver 24 an. Genauer gesagt steht ein Teilabschnitt der Taschenkette 18 mit Teilbereichen des Umfangs des Revolvers 24 in formschlüssigem Eingriff, indem die einzelnen Taschen 17 miteinander verbindende Zahnstege 26 formschlüssig in Vertiefungen des Falt-Revolvers 24 eintreten, nämlich in Vertiefungen der Revolverscheibe 27. Durch die sich im Bereich der Anlage ergebende Verzahnung zwischen der Taschenkette 18 einerseits und der Revolverscheibe 27 andererseits wird die insbesondere kontinuierliche Drehbewegung des Falt-Revolvers 24 auf die Taschenkette 18 übertragen. Der Falt-Revolver 24 wirkt somit als Antrieb der Taschenkette 18.

Im Bereich des formschlüssigen Eingriffs der Zahnstege 26 der Taschenkette 18 in die Vertiefungen der Revolverscheibe 27 - Abgabestation 25 - werden die sich in den Taschen 17 der Taschenkette 18 befindenden Zigaretten-Gruppen 15 durch achsparallele Verschiebungen aus den Taschen 17 der Taschenkette 18 ausgestoßen bzw. ausgeschoben und nicht detailliert dargestellten Taschen des Falt-Revolvers 24 zugeführt.

In besonderer Weise ist die Bewegungscharakteristik der Taschenkette 18 ausgebildet. Die Taschenkette 18 wird entlang einer geschlossenen Zugmittelführungsbahn bzw. Taschenkettenführungsbahn in einer durch die Pfeile in Fig. 1 angegebenen Förderrichtung geführt. Im Bereich der Aufnahmestation 19, d. h. im Bereich des Obertrums 28 der Taschenkette 18 in Fig. 1, wird die Taschenkette 18 taktweise bewegt. Für die Übergabe der Zigaretten-Gruppen 15, also für den Einschub derselben in die den Schachtgruppen 12 des Zigarettenmagazins 11 benachbarten Taschen 17, steht die Taschenkette 18 momentan still (Stillstandsphase). Dies ermöglicht den Einschub der Zigaretten-Gruppen 15 durch die Schieber 14 in die Taschen 17 der Taschenkette 18, und zwar quer zur Förderrichtung der Taschenkette 18. Im Bereich der Abgabestation 25 wiederum, d. h. im Bereich der Anlage der Taschenkette 18 an die Revolverscheibe 27, wird die Taschenkette 18 kontinuierlich bewegt durch die kontinuierliche Drehbewegung der Revolverscheibe 27. Insbesondere der Gleichlauf zwischen Revolverscheibe 27 und Taschenkette 18 in dem Bereich der Abgabestation 25 ermöglicht es, die Zigaretten-Gruppen 15 aus den Taschen 17 der Taschenkette 18 quer zur Förderrichtung in die Taschen des Falt-Revolvers 24 zu überführen.

Diese komplexe Bewegungscharakteristik wird bewirkt, indem dem konstanten bzw. kontinuierlichen, durch die Revolverscheibe 27 bewirkten Förderantrieb eine taktweise Ausgleichsbewegung überlagert ist. Die taktweise Ausgleichsbewegung erzeugt eine erste Umlenkvorrichtung 29, die ein Umlenkmittel 30 zum Umlenken der Taschenkette 18 aufweist. Das Umlenkmittel 30 führt taktweise Hin- und/oder Rückbewegungen aus, nämlich Auf- und/oder Abbewegungen in der Vertikalebene. Dazu ist das Umlenkmittel 30 in nicht dargestellter Weise mit einem geeigneten Antrieb verbunden.

Das Umlenkmittel 30 verfügt über gekrümmte, voneinander beabstandete, innere und äußere Führungsflächen 31 bzw. 32 zur Führung und/oder Anlage der Taschenkette 18. Die Führungsflächen 31, 32 verlaufen annähernd parallel zueinander und gehen endständig über in diese jeweils verbindende, ebenfalls gekrümmte obere bzw. untere Querführungsflächen 33, 34. Die Taschenkette 18 wird entlang der Führungsflächen 31 - 34 um das Umlenkmittel 30 herumgeführt, wobei die oberen und unteren Querführungsflächen 33, 34 für die Taschenkette jeweils annähernd 180°-Umlenkungen bilden.

Die Krümmungen der inneren und der äußeren Führungsflächen 31, 32 entsprechen der Krümmung der Revolverscheibe 27. Das Umlenkmittel 30 ist dabei derart angeordnet, dass die inneren und äußeren Führungsflächen 31, 32 parallel zum Umfang der Revolverscheibe 27 verlaufen. Dabei liegt die Taschenkette 18 in dem Bereich, in dem sie an dem Umfang des Falt-Revolvers 24 anliegt - Abgabestation 25 -, mit der von dem Falt-Revolver 24 abgewandten Seite an der gekrümmten inneren Führungsfläche 31 des Umlenkmittels 30 an.

Die taktweisen Hin- und/oder Rückbewegungen des Umlenkmittels 30, insbesondere der Querführungsflächen 33, 34, bewirken unter Mitnahme der Taschenkette 18 eine gleichgerichtete Bewegung der Taschenkette 18 entlang des Umfangs des Revolvers 24, die der kontinuierlichen Bewegung der Taschenkette 18 in Drehrichtung des Revolvers 24 überlagert ist. Durch die Hin- und/oder Rückbewegungen des Umlenkmittels 30 stehen in Umfangsrichtung des Revolvers 24, insbesondere der Revolverscheibe 27, je nach momentaner Bewegungsphase des Umlenkmittels 30 unterschiedliche Teilabschnitte des Revolvers 24, d.h. insbesondere der Revolverscheibe 27, in formschlüssigem Eingriff mit der Taschenkette 18.

Die Amplitude der Hin- und/oder Herbewegungen des Umlenkmittels 30 ist so abgestimmt, dass während eines Zyklusses aus Hin- und/oder Herbewegung eine (kurze) Stillstandsphase der Taschenkette 18 im Bereich der Aufnahmestation 19 gegeben ist.

In Förderrichtung stromabwärts der Aufnahmestation 19 ist eine zweite Umlenkvorrichtung 35 angeordnet. Diese zweite Umlenkvorrichtung 35 verfügt über ein Umlenkmittel 36 mit halbbogenartig gekrümmter Führungsfläche oder Führungskontur 37. Entlang der Führungsfläche 37 wird eine 180°-Umlenkung der Taschenkette 18 bewirkt. Der im Bereich der Aufnahmestation 19 horizontal verlaufende Obertrum 28 der Taschenkette 18 wird entlang der Führungsfläche 37 umgelenkt, so dass der Untertrum 38 zumindest bereichsweise in Horizontalrichtung antiparallel zum Obertrum 28 verläuft.

Besonders wichtig ist, dass die Führungsfläche 37 keine örtlich konstante, sondern eine örtlich variierende Krümmung aufweist, um den sogenannten Polygoneffekt zu reduzieren.

Dieser Polygoneffekt bewirkt bei Zugmitteln wie der Taschenkette 18 mit periodisch, insbesondere äquidistant beabstandeten Teilelementen - wie den Taschen 17, die voneinander durch die Zahnstege 26 äquidistant beabstandet sind - Geschwindigkeitsschwankungen der einzelnen Teilelemente nach der Umlenkung. Dies kann zu Schwankungen der Gesamtlänge der Taschenkette 18 führen. In dem Bereich der Aufnahmestation 19, in dem die Zigaretten-Gruppen 15 in die Taschenkette 18 eingeschoben werden, können diese Schwankungen der Gesamtlänge der Taschenkette 18 im Extremfall dazu führen, dass die jeweiligen Zigaretten-Gruppen 15 unmittelbar vor dem Einschieben in die Taschen 17 der Taschenkette 18 einen örtlichen Versatz zu den Taschen aufweisen. Dieser Versatz kann das exakte Einschieben der jeweiligen Zigaretten-Gruppe 15 in die Tasche 17 verhindern.

Diese Geschwindigkeits- bzw. Gesamtlängenschwankungen sind dadurch bedingt, dass derartige Zugmittel im Bereich einer Umlenkung der Krümmung der von einem Umlenkmittel vorgegebenen Umlenkbahn nicht ideal folgen können, sondern - zumindest in mathematischer Abstraktion - ein Polygon bilden.

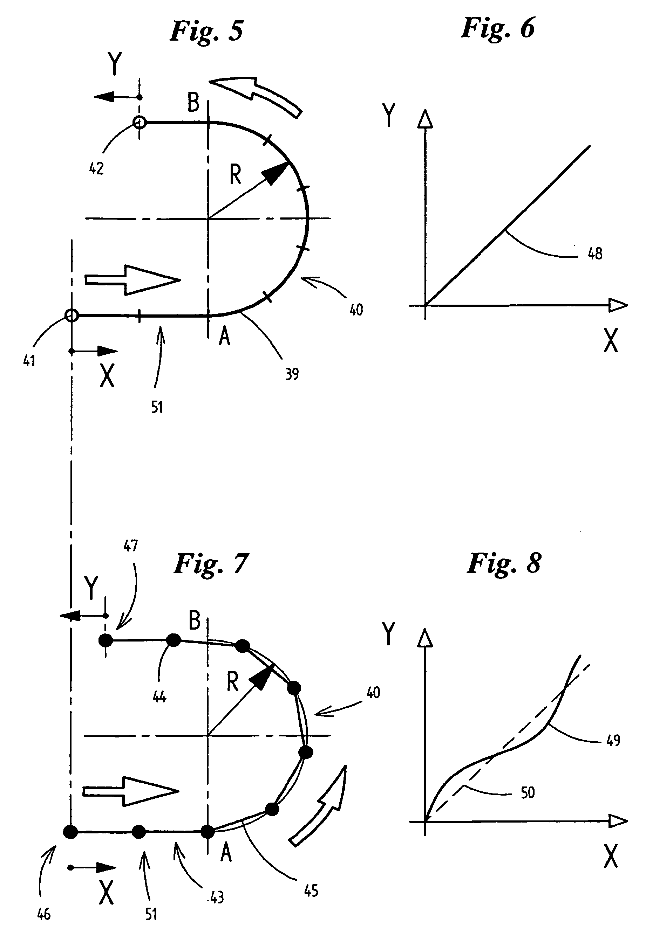

Nachfolgend werden die Zusammenhänge anhand der schematischen Darstellungen der Figuren 5-12 erläutert.

Fig. 5 zeigt eine 180°-Umlenkung eines als Flachriemen 39 ausgebildeten Zugmittels entlang einer gekrümmten Umlenkbahn 40, die Teil einer nur auszugsweise dargestellten, endlosen Zugmittelführungsbahn 51 ist, entlang der der Flachriemen 39 geführt wird. Im Folgenden wird als Umlenkbahn 40 der gekrümmte Bahnabschnitt zwischen den Punkten A und B definiert. Nach den Punkten A und B geht die Umlenkbahn 40 in gerade Anschlüsse der restlichen Zugmittelführungsbahn 51 über. Wie der Fachmann erkennt, kann die Umlenkbahn 40 auch anders gefasst werden, etwa indem noch Abschnitte der geraden Anschlüsse der Zugmittelführungsbahn 51 mit einbezogen werden.

Die Umlenkbahn 40 weist, wie dies im Stand der Technik üblich ist, eine örtlich konstante Krümmung auf, d.h. die Krümmung hat unabhängig vom Ort jeweils einen konstanten Wert. Die Krümmung kann demnach durch einen konstanten Krümmungsradius R beschrieben werden. Da der Flachriemen 39 naturgemäß keine periodisch beabstandeten Teilelemente aufweist, kann er sich in idealer Weise an die Umlenkbahn 40 anschmiegen. Dabei wird die Umlenkbahn durch ein nicht dargestelltes Umlenkmittel bewirkt bzw. vorgegeben, beispielsweise durch eine ortsfeste Umlenkkontur mit gekrümmten Umlenkflächen, entlang der der Flachriemen 39 geführt wird. Ein Polygoneffekt tritt nicht auf. Beliebige Vorschubbewegungen um eine Strecke der Länge X eines vor dem Umlenkbereich angeordneten, beliebigen Punktes 41 des Flachriemens 39 bewirken jeweils Vorschubbewegungen um Strecken identischer Längen eines zugeordneten Punktes 42 auf dem Flachriemen 39 nach dem Umlenkbereich.

Fig. 6 zeigt ein diese Situation beschreibendes Diagramm. Das Diagramm stellt ein kartesisches Koordinatensystem dar, in dem als Ordinate die jeweilige Streckenlänge der Vorschubbewegung des Punktes 42 nach dem Umlenkbereich und als Abszisse die Streckenlänge der Vorschubbewegung des Punktes 41 vor dem Umlenkbereich aufgetragen ist. Die in dem Koordinatensystem eingetragenen Werte beschreiben eine Gerade 48 mit der Steigerung 1, die im Ursprung beginnt. Jede Verschiebung des Punktes 41 um eine Streckenlänge X bewirkt demnach eine Verschiebung des Punktes 42 um eine identische Streckenlänge Y.

Fig. 7 zeigt anstelle eines Flachriemens 39 eine Kette 43 aus einzelnen Teilelementen, nämlich Kettengliedern 44, die miteinander unter äquidistanter Beabstandung durch gerade Zwischenstege 45 verbunden sind. Die Kette 43 wird entlang der Umlenkbahn 40 der Fig. 5 mit derselben, örtlich konstanten Krümmung geführt. In ähnlicher Weise, wie Fig. 6 die Bewegung eines Flachriemens beschreibt, beschreibt Fig. 8 nun die Bewegung der Kette 43 entlang der Umlenkbahn 40. Für ein einlaufendes Kettenglied 46 vor dem Umlenkbereich, nämlich vor dem Startpunkt A der Umlenkbahn 40, sind Vorschubbewegungen um verschiedene Streckenlängen X den durch diese Bewegungen bewirkten Vorschubbewegungen um Streckenlängen Y eines auslaufenden Kettengliedes 47 nach dem Umlenkbereich, d.h. nach dem Punkt B, gegenübergestellt. Die gestrichelte Gerade 50 in Fig. 8 stellt den idealen Bewegungsverlauf dar, wie er etwa von dem Flachriemen 39 bewirkt wird, wenn er ohne Polygoneffekt entlang der Umlenkbahn 40 geführt wird. Die durchgezogene Linie 49 zeigt dagegen den Bewegungsablauf der Gliederkette. Jede Bewegung um eine Strecke der Länge X des einlaufenden Kettengliedes 46 bewirkt unterschiedliche, nicht identische Vorschubbewegungen um Strecken der Länge Y des auslaufenden Kettengliedes 47. Die unterschiedlichen Streckenlängern Y werden durch den Polygoneffekt hervorgerufen, d.h. durch die von dem Krümmungsverlauf der Umlenkbahn 40 abweichende Polygonform der Kette 43 innerhalb des Umlenkbereichs.

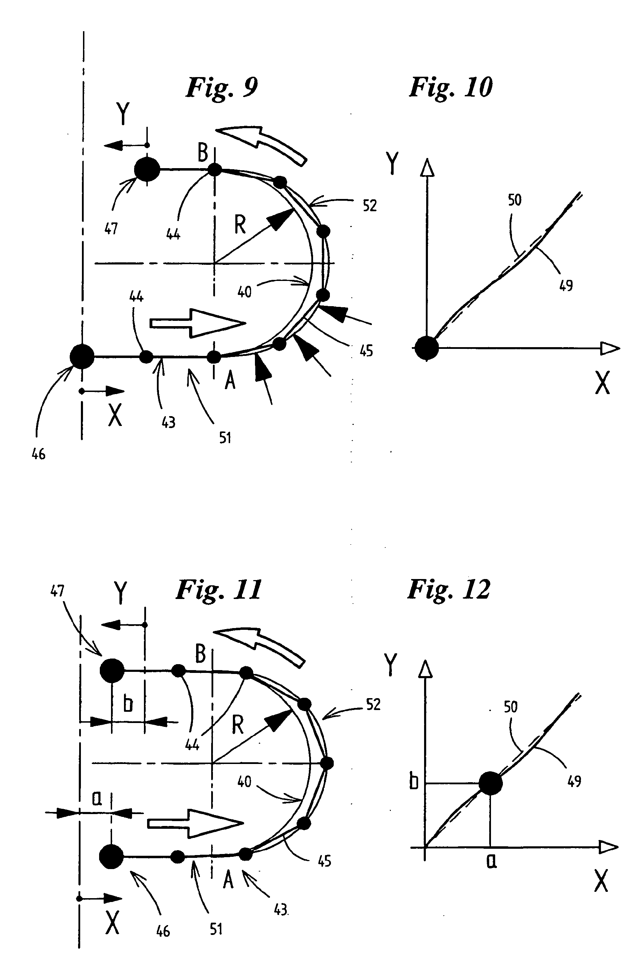

Wie in Fig. 9 dargestellt ist, die Kette 43 nicht entlang einer Umlenkbahn 40 mit konstanter Krümmung zu führen, sondern entlang einer Umlenkbahn 52 mit örtlich variabler Krümmung. Dies führt dazu, dass Vorschubbewegungen um Strecken bestimmter Länge X des einlaufenden Kettengliedes 46 im Vergleich zum Stand der Technik Vorschubbewegungen um Streckenlängen Y des auslaufenden Kettengliedes 47 bewirken, die identisch sind zu den Streckenlängen X oder zumindest in einem sehr engen Intervall um den identischen Wert liegen. Dementsprechend schmiegt sich die Kurve 49 des Bewegungsablaufes der Gliederkette in diesem Fall deutlich besser an den idealen Bewegungsverlauf 48 an, vgl. Fig. 10, als dies bei der Umlenkung mit konstantem Krümmungsradius gemäß Fig. 7, Fig. 8 der Fall ist.

Dabei ist eine entsprechende, die Umlenkbahn 52 bewirkende Umlenkvorrichtung, etwa die Umlenkvorrichtung 35 aus Fig. 1, derart ausgebildet, dass die Umlenkbahn 52 mit örtlich variierender Krümmung eine Funktion sich tangential aneinander anschließender Krümmungsradien ist, wobei der räumliche Verlauf der Umlenkbahn 52 derart gewählt ist, dass zumindest eine Mehrzahl von Vorschubbewegungen des vor dem Umlenkbereich angeordneten, einlaufenden Kettengliedes 46 um Strecken bestimmter Längen X bei dem zugeordneten auslaufenden Kettenglied 47 nach dem Umlenkbereich Vorschubbewegungen um Strecken Y jeweils identischer Längen bewirken. Durch Anpassung des räumlichen Verlaufs der Umlenkbahn 52 gegenüber der Umlenkbahn 40 mit örtlich konstanter Krümmung in der vorgenannten Weise kann demnach erreicht werden, den Polygoneffekt deutlich zu reduzieren oder sogar zu beseitigen.

Eine besonders gute Reduzierung des Polygoneffektes kann erreicht werden, wenn zumindest für eine Mehrzahl von vorgegebenen unterschiedlichen Vorschubbewegungen des einlaufenden Kettengliedes 46 um Streckenlängen X die Bedingung erfüllt ist, dass die jeweiligen Abweichungen der Streckenlängen Y der entsprechenden Vorschubbewegungen des auslaufenden Kettengliedes 47 von den jeweils vorgegebenen Streckenlängen X des einlaufenden Kettengliedes 46 geringer sind im Vergleich zu der Verwendung der Umlenkbahn 40 mit örtlich konstanter Krümmung. Bestimmt wird demnach für eine Mehrzahl von Vorschubbewegungen des einlaufenden Kettengliedes 46, wie groß die Abweichung ist zwischen der Streckenlänge X, um die das einlaufende Kettengliedes 46 bewegt wird und der Streckenlänge Y, um die - bedingt durch die Vorschubbewegung des einlaufenden Kettengliedes 46 - das auslaufende Kettengliedes 47 verschoben wird. Für eine Mehrzahl von Vorschubbewegungen des einlaufenden Kettengliedes 46 soll diese Abweichung geringer sein als die Abweichung bei der örtlich konstanten Krümmung der Umlenkbahn 40.

Wie ein Vergleich der Bewegungskurven 49 der Fig. 8 einerseits und der Fig. 10 bzw. 11 andererseits ergibt, wird die vorgenannte Bedingung durch die Umlenkbahn 52 erfüllt: Die Bewegungskurve 49 der Fig. 10 schmiegt sich deutlich enger an die ideale Bewegungskurve 48 an als die Bewegungskurve 49 der Fig. 8.

Weiter kann der Polygoneffekt reduziert werden, je größer die Anzahl von Vorschubbewegungen ist, bei denen die weiter oben bereits genannte Bedingung erfüllt ist, wonach die Umlenkbahn 52 mit örtlich variierender Krümmung eine Funktion sich tangential aneinander anschließender Krümmungsradien ist und der räumliche Verlauf der Umlenkbahn 52 derart gewählt ist, dass zumindest eine Mehrzahl von Vorschubbewegungen des einlaufenden Kettengliedes 46 um Strecken bestimmter Längen X bei dem zugeordneten auslaufenden Kettenglied 47 Vorschubbewegungen um Strecken Y jeweils identischer Längen bewirken. Erfindungsgemäß sollte diese Bedingung für eine möglichst große Anzahl von Vorschubbewegungen erfüllt sein, vorzugsweise für sämtliche Vorschubbewegungen. Besonders bevorzugt kann diese Anzahl unterschiedlicher Vorschubbewegungen um Streckenlängen X des einlaufenden Kettengliedes 46, die zu Vorschubbewegungen des auslaufenden Kettengliedes 47 mit jeweils identischen Streckenlängen Y führen, größer sein als dies bei der örtlich konstanten Krümmung der Umlenkbahn 40 der Fall ist.

In Fig. 11 und der zugeordneten Fig. 12 ist eine gegenüber der Fig. 9 veränderte Stellung der Kette 43 gezeigt nach einer Vorschubbewegung des einlaufenden Kettengliedes 46 um eine Strecke der Länge a. Diese Vorschubbewegung bewirkt eine Vorschubbewegung der Streckenlänge b des auslaufenden Kettengliedes 47. Die beiden Streckenlängen a und b sind identisch, wie in dem in Fig. 12 dargestellten Kurvenverlauf zu erkennen ist.

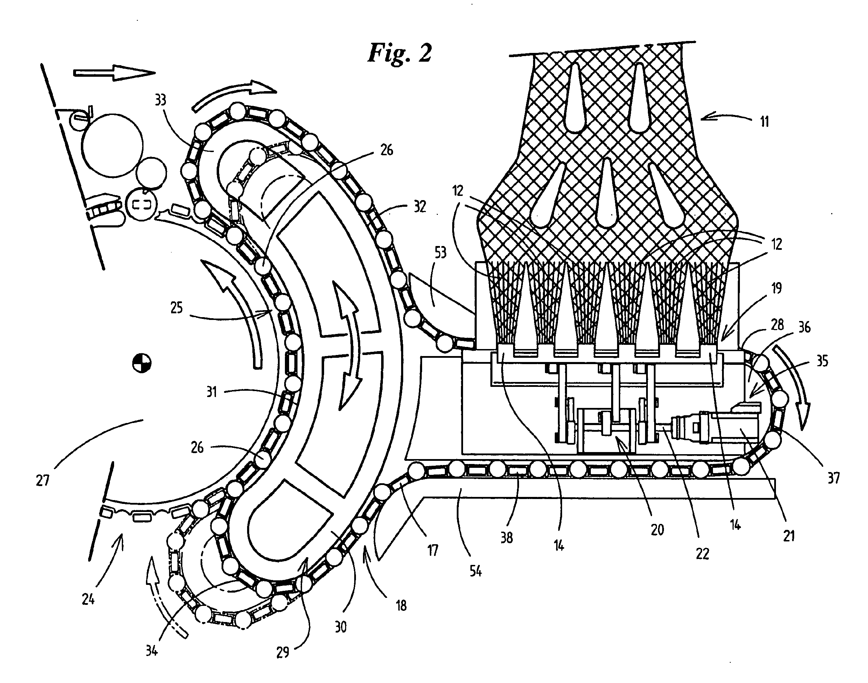

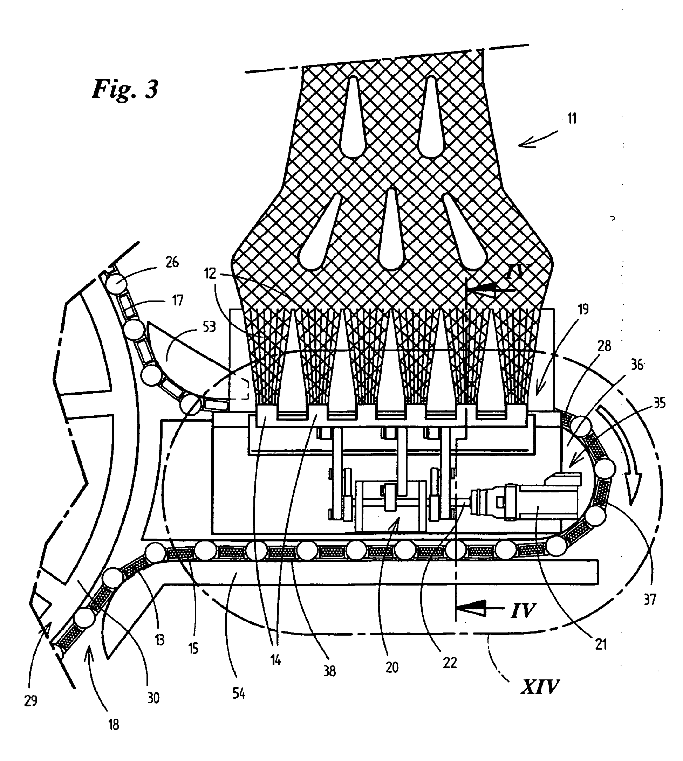

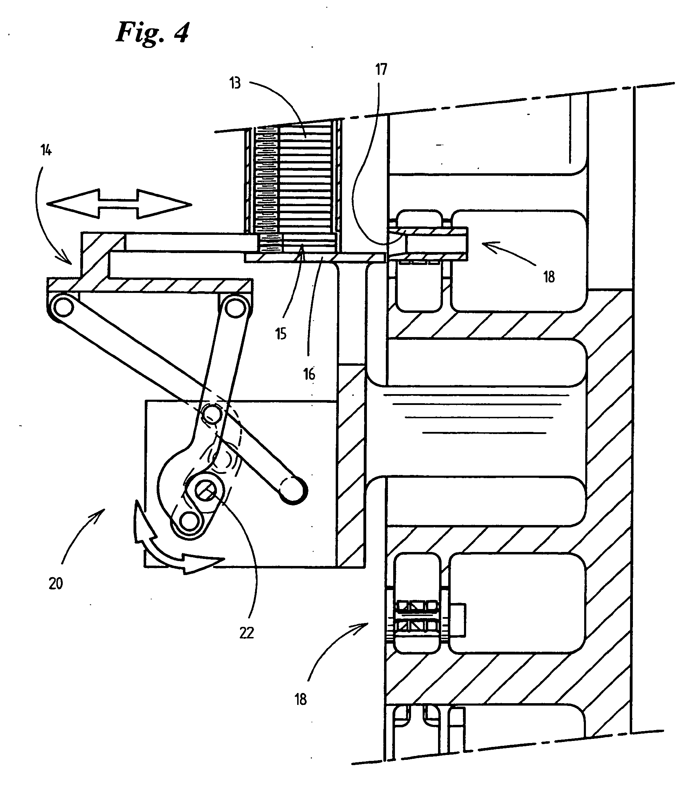

In ähnlicher Weise wie vorstehend im Zusammenhang mit den Fig. 9-12 erläutert, ist die Krümmung der Führungsfläche 37 des Umlenkmittels 36 der Verpackungsmaschine der Fig. 1-4 örtlich variierend ausgebildet, um den Polygoneffekt der umlaufenden Taschenkette 18 zu reduzieren. Die besondere Ausgestaltung der Führungsfläche 37 bewirkt im vorliegenden Fall bereits eine ausreichende Reduzierung des Polygoneffekts, die unter anderem dazu führt, dass die Gesamtlänge der Taschenkette 18 während des gesamten Umlaufs der Taschenkette 18 identisch ist. Erfindungsgemäß kann aber auch vorgesehen sein, beispielsweise die erste, Hin- und/oder Herbewegungen ausführende Umlenkvorrichtung 29 der Verpackungsmaschine derart auszubilden, dass Polygoneffekte reduziert werden. Dazu müssen eine oder mehrere der relevanten Führungsflächen bzw. Führungskonturen 31-34 des Umlenkmittels 30 geeignete, örtlich variierende Krümmungen aufweisen. Weiter können auch die gekrümmten Führungsflächen von Schienen 53, 54 der Verpackungsmaschine, durch die die Taschenkette 18 zunächst horizontal geführt und anschließend aus der Horizontalen nach oben bzw. unten abgelenkt wird, in erfindungsgemäßer Weise ausgebildet werden, um etwaige Polygoneffekte zu reduzieren.

Es ist denkbar, die örtlich variierenden Krümmungen von Umlenkbahnen mehrerer Umlenkvorrichtungen einer Anlage - wie der zuvor beschriebenen Verpackungsmaschine - derart aufeinander abzustimmen, dass sie gemeinsam den Gesamtpolygoneffekt der verschiedenen Umlenkungen bzw. Umlenkvorrichtungen kompensieren. Wie der Fachmann erkennt, sind hier verschiedenste Möglichkeiten denkbar.

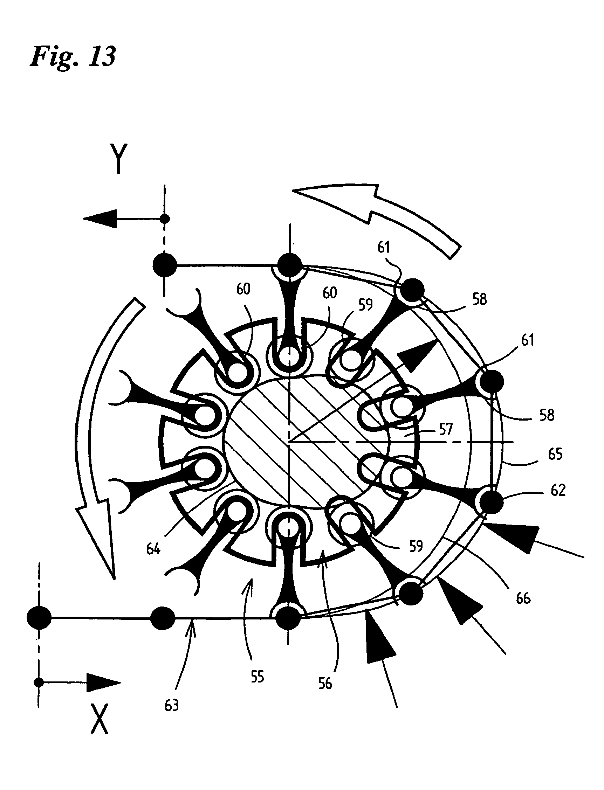

In Fig. 13 ist schließlich eine Alternativlösung zu den oben beschriebenen Umlenkvorrichtungen gezeigt, deren Umlenkmittel jeweils feste Führungsflächen oder Führungskonturen mit örtlich variierender Krümmung aufweisen. Die Umlenkvorrichtung 55 der Fig. 13 weist dagegen als Umlenkmittel 56 ein mittels eines nicht dargestellten Antriebes rotierbares Rad 57 auf mit über den Umfang des Rades verteilten, in Radialrichtung verschiebbaren Führungshebeln 58. Dazu sind die Führungshebel 58 verschiebbar in ebenfalls über den Umfang verteilten, radialgerichteten Nuten 59 des Rades 57 geführt. Die Führungshebel 58 ragen in Radialrichtung über den Umfang des Rades 57 hinaus. Endständig sind die Führungshebel 58 auf der dem Rad 57 zugewandten Seite mit Kurvenrollen 60 wirkverbunden. An der dem Rad 57 abgewandten Seite weisen die Führungshebel 58 endständig insbesondere konkave Aufnahmen 61 für die - temporäre - Führung von beispielsweise Gliedergelenken 62 einer Kette 63 auf. Die einzelnen Kurvenrollen 60 rollen während der Drehung des Rades 57 auf einer ortsfesten Führungsfläche, nämlich einer Kurvenkontur 64 ab. Durch das Abrollen der Kurvenrollen 60 auf der Kurvenkontur 64 führen die Führungshebel 58 überlagerte Translations- und Rotationsbewegungen aus. Die Kette 63 kann dementsprechend durch die Umlenkvorrichtung 55 entlang einer Umlenkbahn 65 geführt werden, deren Krümmung örtlich variiert. Zum Vergleich ist in der Fig. 13 noch eine Umlenkbahn 66 mit örtlich konstanter Krümmung dargestellt. Die Krümmungswerte der Umlenkbahn 65 können durch geeignete Dimensionierung der einzelnen Bauteile der Umlenkvorrichtung 55 vorgegeben werden.

### Bezugszeichenliste:

- 10: Packung
- 11: Zigarettenmagazin
- 12: Schachtgruppe
- 13: Zigaretten
- 14: Schieber
- 15: Zigaretten-Gruppe
- 16: Führungsplatte
- 17: Tasche
- 18: Taschenkette
- 19: Aufnahmestation
- 20: Getriebe
- 21: Servomotor
- 22: Welle
- 24: Falt-Revolver
- 25: Abgabestation
- 26: Zahnsteg
- 27: Revolverscheibe
- 28: Obertrum
- 29: Umlenkvorrichtung
- 30: Umlenkmittel
- 31: Führungsfläche
- 32: Führungsfläche
- 33: Querführungsfläche
- 34: Querführungsfläche
- 35: zweite Umlenkvorrichtung
- 36: Umlenkmittel
- 37: Führungsfläche
- 38: Untertrum
- 39: Flachriemen
- 40: Umlenkbahn
- 41: Punkt auf Flachriemen
- 42: Punkt auf Flachriemen
- 43: Kette
- 44: Kettenglied
- 45: Zwischensteg
- 46: einlaufendes Kettenglied
- 47: auslaufendes Kettenglied
- 48: idealer Bewegungsablauf
- 49: durchgezogene Linie
- 50: gestrichelte Linie
- 51: Zugmittelführungsbahn
- 52: Umlenkbahn
- 53: Schiene
- 54: Schiene
- 55: Umlenkvorrichtung
- 56: Umlenkmittel
- 57: rotierendes Rad
- 58: Führungshebel
- 59: Nut
- 60: Kurvenrolle
- 61: konkave Aufnahme
- 62: Kettenglied
- 63: Kette
- 64: Kurvenkontur
- 65: Umlenkbahn
- 66: Umlenkbahn
- 67: Übergaberevolver
- 68: Trockenrevolver
- 69: Abförderer
- 70: Überführungseinrichtung
- 71: Überführteil
- 72: inneres Verbindungsteil
- 73: mittleres Verbindungsteil
- 74: äußeres Verbindungsteil
- 75: Drehgelenk
- 76: Drehgelenk

## Patentansprüche

1. Vorrichtung zum Fördern von Zigaretten-Gruppen (15) oder anderen Gegenständen in bzw. im Zusammenhang mit einer Verpackungsmaschine, mit einer Überführungseinrichtung (70) mit einem Überführteil zur translatorischen Überführung der Gegenstände (15) aus einer Anfangsposition in eine Endposition, **dadurch gekennzeichnet, dass** die Überführungseinrichtung (70) einen rotatorischen Servomotor (21) aufweist, dessen Welle taktweise (22) Bewegungen in einer Drehrichtung sowie Bewegungen in entgegengesetzter Drehrichtung ausführt, sowie ein mit der Welle (22) des Servomotors (21) wirkverbundenes Getriebe (20), mit dem die Rotationsbewegung der Servomotorwelle (22) in der einen Richtung in eine translatorische Vorwärtsbewegung des die Gegenstände (15) aus der Anfangsposition translatorisch in die Endposition überführenden, insbesondere stoßenden oder schiebenden, Überführteils (71) übersetzbar ist und mit dem die Rotationsbewegung der Servomotorwelle (22) in der entgegengesetzten Richtung in eine translatorische Rückbewegung des Überführteils (71) übersetzbar ist.

2. Vorrichtung gemäß Anspruch 1, **dadurch gekennzeichnet, dass** das Antriebsglied des Getriebes (20) mit der Servomotorwelle (22) wirkverbunden sowie drehbar ist, und dass das Abtriebsglied des Getriebes (22) das Überführteil (71) ist oder mit dem Überführteil (71) wirkverbunden ist sowie translatorisch vor- und/oder rückbewegbar ist, insbesondere in einer horizontalen Ebene.

3. Vorrichtung gemäß Anspruch 1 oder 2, **dadurch gekennzeichnet, dass** das Getriebe (20) in einer Reduktion auf eine kinematische Kette als Viergelenk-Getriebe ausgebildet ist.

4. Vorrichtung gemäß einem oder mehreren der Ansprüche 1 - 3, **dadurch gekennzeichnet, dass** das Überführteil (71) ein oder mehrere fingerartige Schieber (14) oder Einstößer aufweist, mit denen die Gegenstände (15) aus der Anfangsposition in die Endposition schiebbar oder stoßbar sind.

5. Verfahren zum Fördern von Zigaretten-Gruppen (15) oder anderen Gegenständen in bzw. im Zusammenhang mit einer Verpackungsmaschine, wobei die Gegenstände (15) mittels einer Überführungseinrichtung (70) translatorisch aus einer Anfangsposition in eine Endposition überführt werden, und wobei die Überführungseinrichtung (70) ein Überführteil (71) aufweist, das die Gegenstände (15) aus der Anfangsposition in die Endposition stößt oder schiebt, **dadurch gekennzeichnet, dass** die Überführungseinrichtung (70) über einen rotatorischen Servomotor (21) sowie ein Getriebe (20) verfügt, das Bewegungen der Welle des Servomotors (21) in der einen Drehrichtung in eine translatorische Bewegung des Überführteils (71) in Vorwärtsrichtung übersetzt und Bewegungen der Welle (22) in der entgegengesetzten Drehrichtung in eine translatorische Rückbewegung des Überführteils (71) in die entgegengesetzte Richtung, wobei der Servomotor (21) derart gesteuert wird, dass sich die Servomotorwelle (22) taktweise in der einen oder in der entgegengesetzten Richtung dreht, sodass das Überführteil (71) taktweise entsprechende translatorische Vor- und/oder Rückbewegungen ausführt.

6. Verfahren gemäß Anspruch 5, **dadurch gekennzeichnet, dass** das Überführteil (71) während der Vorwärtsbewegung auf die Gegenstände (15) auftrifft und diese unter Mitnahme derselben in Richtung der Endposition verschiebt, wobei die Geschwindigkeit und/oder die Drehrichtung der Welle (22) des Servomotors (21) während dieser Vorwärtsbewegung derart gesteuert wird, dass das Überführteil (71) zunächst mit möglichst geringer Geschwindigkeit auf die Gegenstände (15) auftrifft und dass die Geschwindigkeit des Überführteils (71) anschließend gegenüber dieser Auftreffgeschwindigkeit zumindest zeitweise erhöht wird.

7. Verfahren gemäß Anspruch 5 oder 6, **dadurch gekennzeichnet, dass** das Überführteil (71) die Gegenstände (15) aus einem insbesondere vertikal angeordneten Zigarettenmagazin (11) in Taschen (17) eines benachbarten Taschenförderers (18) einschiebt oder einstößt.

## Claims

1. Apparatus for conveying cigarette groups (15) or other objects in or in conjunction with a packaging machine, having a transferring device (70) having a transfer part for transferring the objects (15) translationally from a starting position to an end position, **characterized in that** the transferring device (70) has a rotary servomotor (21), the shaft (22) of which executes periodically movements in one direction of rotation and also movements in the opposite direction of rotation, and also a gear mechanism (20) which is operatively connected to the shaft (22) of the servomotor (21) and by way of which the rotary movement of the servomotor shaft (22) in one direction is convertible into a translational forward movement of the transfer part (71) that transfers, in particular pushes or slides, the objects (15) translationally from the starting position to the end position, and by way of which the rotary movement of the servomotor shaft (22) in the opposite direction is convertible into a translational reverse movement of the transfer part (71).

2. Apparatus according to Claim 1, **characterized in that** the driving member of the gear mechanism (20) is operatively connected to the servomotor shaft (22) and also rotatable, and **in that** the driven member of the gear mechanism (22) is the transfer part (71) or is operatively connected to the transfer part (71) and can be moved translationally back and/or forth, in particular in a horizontal plane.

3. Apparatus according to Claim 1 or 2, **characterized in that** the gear mechanism (20) is formed as a four-bar mechanism in a reduction to a kinematic chain.

4. Apparatus according to one or more of Claims 1-3, **characterized in that** the transfer part (71) has one or more finger-like sliders (14) or pushers, by way of which the objects (15) can be slid or pushed from the starting position to the end position.

5. Method for conveying cigarette groups (15) or other objects in or in conjunction with a packaging machine, wherein the objects (15) are transferred translationally by means of a transferring device (70) from a starting position to an end position, and wherein the transferring device (70) has a transfer part (71) which pushes or slides the objects (15) from the starting position to the end position, **characterized in that** the transferring device (70) has a rotary servomotor (21) and a gear mechanism (20), which converts movements of the shaft of the servomotor (21) in one direction of rotation into a translational movement of the transfer part (71) in the forward direction and converts movements of the shaft (22) in the opposite direction of rotation into a translational reverse movement of the transfer part (71) in the opposite direction, wherein the servomotor (21) is controlled such that the servomotor shaft (22) rotates periodically in one direction or the opposite direction, so that the transfer part (71) periodically executes corresponding translational movements back and/or forth.

6. Method according to Claim 5, **characterized in that** the transfer part (71) strikes the objects (15) during the forward movement and pushes them, carrying them along in the direction of the end position, wherein the speed and/or the direction of rotation of the shaft (22) of the servomotor (21) is controlled during this forward movement such that the transfer part (71) initially strikes the objects (15) as slowly as possible and such that the speed of the transfer part (71) is subsequently at least temporarily increased with respect to this striking speed.

7. Method according to Claim 5 or 6, **characterized in that** the transfer part (71) slides or pushes the objects (15) from an in particular vertically arranged cigarette magazine (11) into pockets (17) in an adjacent pocket conveyor (18).

## Revendications

1. Dispositif de transport de groupes de cigarettes (15) ou d'autres objets dans une machine d'emballage ou dans le contexte d'une machine d'emballage, comprenant un dispositif de transfert (70) avec une partie de transfert pour le transfert en translation des objets (15) depuis une position de départ dans une position terminale, **caractérisé en ce que** le dispositif de transfert (70) présente un servomoteur rotatif (21) dont l'arbre effectue de manière cadencée (22) des mouvements dans un sens de rotation et des mouvements dans le sens de rotation opposé, ainsi qu'un mécanisme (20) en liaison fonctionnelle avec l'arbre (22) du servomoteur (21), avec lequel le mouvement de rotation de l'arbre (22) du servomoteur dans un sens peut être converti en un mouvement d'avance en translation de la partie de transfert (71) transférant les objets (15) à partir de la position de départ en translation dans la position terminale, notamment par poussée ou coulissement, et avec lequel le mouvement de rotation de l'arbre (22) du servomoteur dans le sens opposé peut être converti en un mouvement de retour en translation de la partie de transfert (71).

2. Dispositif selon la revendication 1, **caractérisé en ce que** l'organe d'entraînement du mécanisme (20) est en liaison fonctionnelle avec l'arbre (22) du servomoteur et est rotatif, et **en ce que** l'organe de sortie du mécanisme (20) est la partie de transfert (71) ou est en liaison fonctionnelle avec la partie de transfert (71) et peut être déplacé en translation vers l'avant et/ou vers l'arrière, notamment dans un plan horizontal.

3. Dispositif selon la revendication 1 ou 2, **caractérisé en ce que** le mécanisme (20) est réalisé dans un système réducteur sur une chaîne cinématique sous forme de quadrilatère articulé.

4. Dispositif selon l'une quelconque ou plusieurs des revendications 1 à 3, **caractérisé en ce que** la partie de transfert (71) présente un ou plusieurs coulisseaux (14) ou poussoirs, avec lesquels les objets (15) peuvent être glissés ou poussés de la position de départ dans la position terminale.

5. Procédé de transport de groupes de cigarettes (15) ou d'autres objets dans une machine d'emballage ou dans le contexte d'une machine d'emballage, les objets (15) étant transférés au moyen d'un dispositif de transfert (70) en translation depuis une position de départ dans une position terminale, et le dispositif de transfert (70) présentant une partie de transfert (71) qui pousse ou fait glisser les objets (15) de la position de départ dans la position terminale, **caractérisé en ce que** le dispositif de transfert (70) dispose d'un servomoteur rotatif (21) ainsi que d'un mécanisme (20) qui convertit des mouvements de l'arbre du servomoteur (21) dans un sens de rotation en un mouvement de translation de la partie de transfert (71) vers l'avant et des mouvements de l'arbre (22) dans le sens de rotation opposé en un mouvement de translation vers l'arrière de la partie de transfert (71) dans le sens opposé, le servomoteur (21) étant commandé de telle sorte que l'arbre (22) du servomoteur tourne de manière cadencée dans l'un ou l'autre sens de sorte que la partie de transfert (71) effectue, de manière cadencée, des mouvements de translation vers l'avant et/ou vers l'arrière.

6. Procédé selon la revendication 5, **caractérisé en ce que** la partie de transfert (71), pendant le mouvement vers l'avant, vient en contact avec les objets (15) et fait glisser ceux-ci en les entraînant dans le sens de la position terminale, la vitesse et/ou le sens de rotation de l'arbre (22) du servomoteur (21) pendant ce mouvement d'avance étant commandé(e) de telle sorte que la partie de transfert (71) parvienne d'abord à une vitesse aussi faible que possible en contact avec les objets (15), et que la vitesse de la partie de transfert (71) soit ensuite au moins temporairement accrue par rapport à cette vitesse d'entrée en contact.

7. Procédé selon la revendication 5 ou 6, **caractérisé en ce que** la partie de transfert (71) pousse ou enfonce les objets (15) depuis un magasin de cigarettes (11) disposé notamment verticalement dans des poches (17) d'un transporteur à poches (18) adjacent.
